(19) Europäisches Patentamt
European Patent Office
Office européen des brevets

(11) **EP 3 390 311 B1**

(12) **FASCICULE DE BREVET EUROPEEN**

(45) Date de publication et mention
de la délivrance du brevet:
**14.08.2019 Bulletin 2019/33**

(51) Int Cl.:
***B32B 17/10*** *(2006.01)*   ***C03C 4/18*** *(2006.01)*
***C03C 8/02*** *(2006.01)*   ***C03C 3/085*** *(2006.01)*
***C03C 3/087*** *(2006.01)*   ***C03C 4/02*** *(2006.01)*
***C03C 21/00*** *(2006.01)*

(21) Numéro de dépôt: **16826111.3**

(22) Date de dépôt: **16.12.2016**

(86) Numéro de dépôt international:
**PCT/FR2016/053514**

(87) Numéro de publication internationale:
**WO 2017/103528 (22.06.2017 Gazette 2017/25)**

(54) **VERRE MINCE COLORÉ RENFORCÉ CHIMIQUEMENT**

DÜNNES, CHEMISCH VERSTÄRKTES FARBIGES GLAS

THIN, CHEMICALLY STRENGTHENED COLOURED GLASS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.12.2015 FR 1562678**

(43) Date de publication de la demande:
**24.10.2018 Bulletin 2018/43**

(73) Titulaire: **Saint-Gobain Glass France
92400 Courbevoie (FR)**

(72) Inventeurs:
• **CLAIREAUX, Corinne
75019 Paris (FR)**
• **FREDY, Carole
94130 Nogent-sur-Marne (FR)**
• **CINTORA-GONZALEZ, Octavio
95150 Taverny (FR)**

(74) Mandataire: **Saint-Gobain Recherche
Département Propriété Industrielle
39 Quai Lucien Lefranc
93300 Aubervilliers (FR)**

(56) Documents cités:
**EP-A1- 0 452 207       EP-B1- 1 487 752
EP-B1- 1 732 854        WO-A1-2015/059406
WO-A1-2015/059407       US-A1- 2014 017 499**

EP 3 390 311 B1

**Description**

La présente invention porte sur un verre mince coloré renforcé chimiquement. Ce verre mince coloré peut être une des feuilles de verre d'un vitrage feuilleté et ainsi être utilisé par exemple pour des applications dans le domaine de l'automobile.

Les vitrages colorés sont couramment utilisés dans le domaine des transports et du bâtiment et sont obtenus en introduisant dans la composition chimique des verres des agents colorants, comme par exemple des oxydes de fer, des oxydes de cobalt et/ ou des oxydes de nickel, qui permettent de modifier la transmission lumineuse et la transmission énergétique du verre. Ainsi pour des vitrages de toits ou de lunettes arrière, les constructeurs cherchent à réduire la transmission lumineuse pour le confort des passagers et du conducteur. WO2015/059407 décrit une feuille de verre d'aluminosilicate de sodium, associée à une feuille de verre silico-sodocalcique.

Une des tendances actuelles, notamment dans le domaine de l'automobile où on cherche à diminuer le poids des véhicules, consiste à diminuer les épaisseurs des feuilles de verre constituant les vitrages automobiles. Fabriquer un vitrage feuilleté avec deux feuilles de verre mince reste encore aujourd'hui difficile, puisque le produit final ne possède pas la rigidité nécessaire pour des applications automobiles. Une des solutions adoptées consiste à utiliser des vitrages feuilletés dans lesquels seule une des feuilles de verre constitutives du vitrage feuilleté est une feuille de verre mince. Ce type de vitrage est par conséquent asymétrique. Il est nécessaire que les vitrages feuilletés asymétriques même allégés présentent une résistance mécanique compatible avec les applications recherchées et qu'il reste possible de les fabriquer par des procédés habituels de formage et de mise en forme. Une des possibilités permettant de renforcer la résistance mécanique du vitrage consiste à utiliser au moins une feuille de verre qui possède une zone superficielle en compression et une zone centrale en tension. Ce type de feuille de verre est notamment obtenu en lui faisant subir un procédé de trempe thermique ou chimique. La trempe chimique est un procédé qui consiste à réaliser un échange ionique au sein de la feuille de verre : la substitution superficielle d'un ion (généralement un ion alcalin tel que le sodium ou le lithium) par un ion de rayon ionique plus grand (généralement un autre ion alcalin, tel que le potassium ou le sodium) depuis la surface du verre jusqu'à une profondeur communément désignée par « profondeur d'échange », permet de créer en surface de la feuille de verre des contraintes résiduelles de compression jusqu'à une certaine profondeur, souvent appelée « profondeur de compression ». Cette profondeur dépend notamment de la durée du traitement d'échanges d'ions, de la température à laquelle celui-ci est réalisé et également de la composition de la feuille de verre. Il est nécessaire de trouver un compromis entre la durée et la température de ce traitement, prenant notamment en compte les contraintes de production dans les lignes de fabrication des vitrages. Dans le cas des verres colorés, il est connu que certains agents colorants comme notamment l'oxyde de fer, couramment utilisés dans les compositions verrières ont tendance à réduire le renforcement chimique puisque la présence de fer dans les compositions verrières entraîne une diminution de la profondeur d'échange. Il est donc nécessaire d'adapter les compositions chimiques des verres colorés pour qu'elles soient compatibles avec des procédés de trempe chimique.

Un vitrage feuilleté asymétrique comprenant une feuille de verre trempée chimiquement est donc souvent un vitrage constitué de deux feuilles de verre d'épaisseur différente et également de composition chimique différente. Or, pour les applications souhaitées et notamment dans le domaine des transports (automobile, avions, hélicoptères..), il est nécessaire de donner une certaine courbure au vitrage et de réaliser un bombage des feuilles de verre constitutives du vitrage avant leur assemblage. Il est avantageux d'utiliser des techniques de bombage qui permettent de bomber simultanément les feuilles de verre. Ceci permet en particulier de s'assurer que les feuilles présenteront exactement les mêmes courbures, ce qui facilitera leur assemblage. Dans les procédés de bombage, les deux feuilles de verre sont posées l'une sur l'autre et sont supportées le long de leurs parties d'extrémités marginales d'une façon sensiblement horizontale par un cadre ou squelette ayant le profil désiré, c'est-à-dire le profil définitif du vitrage après assemblage. La feuille de verre d'épaisseur la plus mince est positionnée sur la feuille de verre plus épaisse de sorte que l'appui de la feuille mince sur la feuille plus épaisse se fasse de façon homogène sur la totalité des zones en contact. Ainsi positionnées sur le cadre, les deux feuilles de verre passent dans un four de bombage. Etant donné que les deux feuilles de verre ont des compositions chimiques différentes, leur comportement pendant cette étape de bombage est différent et le risque d'apparition de défauts ou contraintes résiduelles peut être par conséquent augmenté.

La demande de brevet WO2014/ 120641 décrits des verres colorés dont la composition chimique a été modifiée pour pouvoir être trempés chimiquement. Toutefois, la plupart des verres décrits dans ce document sont noirs. Ils ont une teneur très élevée en oxyde d'aluminium, introduit pour compenser la présence de fer défavorable à la trempe chimique. Cette augmentation d'alumine n'est pas souhaitable car elle entraine une augmentation rapide de la viscosité du verre et par conséquent des coûts de procédés plus élevés. D'autre part, les compositions de verre décrites dans cette demande de brevet n'ont pas nécessairement les propriétés souhaitées permettant un bombage simultané avec une feuille de verre silico-sodo-calcique.

On cherche donc à obtenir des compositions de verre qui soient à la fois colorés, avec différentes colorations possibles (vert, bleu ou gris en fonction des colorants choisis), qui permettent d'être trempées chimiquement, même avec une teneur importante en colorants et qui puissent être bombées simultanément avec une feuille de verre de type silico-sodo-calcique lors du procédé de fabrication de vitrages feuilletés. C'est dans ce cadre que s'inscrit la présente invention dont un des objets porte sur une feuille de verre coloré renforcée chimiquement. Un autre objet de l'invention porte sur un vitrage feuilleté comprenant au moins une feuille de verre coloré renforcée chimiquement. Le procédé de fabrication d'un tel vitrage feuilleté est égal ement un objet de l'invention.

A cet effet, l'invention a pour objet une feuille de verre coloré renforcée chimiquement par un échange ionique comprenant les oxydes suivants dans les gammes de teneurs pondérales définies ci-après :

| | |
|---|---|
| $SiO_2$ | entre 59,20 et 68, 00% |
| $Al_2O_3$ | entre 2,00 et 8,00% |
| MgO | entre 6,00 et 9,00% si la teneur en $Al_2O_3$ est comprise |
| | entre 5,00 et 8,00% et si le rapport $SiO_2/Al_2O_3$ est supérieur ou égal à 7,8 ou |
| | entre 8,00 et 10,00 %si la teneur en $Al_2O_3$ est comprise |
| | entre 2,00 et 5,00% et si le rapport $SiO_2/Al2O_3$ est supérieur ou égal à 24, |
| $Na_2O$ | entre 9,00 et 16,00% |
| $K_2O$ | entre 5,00 et 11,00% |
| $B_2O_3$ | entre 0 et 3,00% |
| CaO | entre 0 et 1,00% |

et les agents colorants suivants dans les gammes de teneurs pondérales définies ci-après :

| | |
|---|---|
| $Fe_2O_3$ total | entre 0,05 et 6,00% |
| CoO | entre 0 et 2,00% |
| NiO | entre 0 et 1,00% |
| Se | entre 0 et 0,10% |

le verre présentant un facteur redox compris entre 0,10 et 0,65.

Les feuilles de verres présentant cette composition peuvent avoir une coloration verte, bleue ou grise, en fonction des agents introduits qu'elles contiennent et de leurs quantités respectives.

Selon un mode de réalisation, la teneur en $Al_2O_3$ est comprise entre 3,00 et 8,00% et dans ce cas, la teneur en MgO est comprise entre 8,00 et 10,00 %si la teneur en $Al_2O_3$ est comprise entre 3,00 et 5,00% et si le rapport $SiO_2/Al2O_3$ est supérieur ou égal à 24.

D'autres agents colorants choisis parmi les oxydes de vanadium, de chrome, de manganèse, de cuivre, d'argent, de titane, d'étain, de lanthanides, et/ou les sulfures par exemple comme les sulfures de cadmium peuvent être ajoutés dans la composition dans une teneur pondérale inférieure à 1,00%

La feuille de verre peut également comprendre d'autres additifs comme par exemple des agents modifiant les propriétés optiques dans certaines parties du spectre, notamment dans le domaine de l'ultraviolet, tels que $CeO_2$, $WO_3$, $La_2O_3$ et $V_2O_5$, la teneur pondérale totale de ces additifs n'excédant pas 2,00% de préférence 1,00%

Les feuilles de verre ainsi colorées sont notamment caractérisées par leur transmission lumineuse sous illuminant A (TLA) au sens de la norme ISO 11664-2 avec comme observateur celui de référence CIE 1931 au sens de la norme ISO 11664-1 et par leur transmission énergétique totale au sens de la norme ISO 9050 : 2003 pour une épaisseur donnée.

Le niveau de coloration des verres est déterminé en indiquant les coordonnées colorimétriques CIE L*a*b*, pour lesquels L* correspond à la clarté et a* et b* sont des paramètres qui expriment l'écart de la couleur par rapport à celle d'une surface grise de même clarté. L'illuminant utilisé est l'illuminant D65 et l'observateur est celui de référence CIE 1964 au sens des normes ISO 11664-1 et -2.

La teneur en fer totale est exprimée sous la forme d'oxyde $Fe_2O_3$. L'oxyde de fer peut être présent sous forme ferrique ou ferreuse. L'expression « $Fe_2O_3$ total » doit donc se comprendre comme désignant la totalité de l'oxyde de fer présent dans le verre, c'est-à-dire sous les deux formes possibles, mais exprimée sous la forme de $Fe_2O_3$. Le facteur redox est défini comme étant le rapport de la teneur pondérale de l'oxyde ferreux exprimé sous forme de FeO à la teneur pondérale en fer total exprimé sous la forme $Fe_2O_3$.

La présence de fer dans les compositions de verre donne une coloration bleue-verte en fonction du redox et diminue les transmissions lumineuse et énergétique du verre.

L'oxyde de cobalt participe à la coloration bleue de la feuille de verre.

L'oxyde de nickel donne une coloration brune/grise à la feuille de verre.

En faisant varier les teneurs en colorants, une large gamme de coloration est ainsi accessible, tout en maintenant la possibilité de renforcer chimiquement la feuille de verre, sans que les propriétés optiques soient fortement modifiées.

La teneur en $SiO_2$, principal oxyde formateur du verre, est comprise entre 59,20% et 68,00 %en poids. Cette gamme permet avantageusement d'avoir des compositions stables, qui présentent une bonne aptitude au renforcement chimique et des viscosités compatibles avec les procédés de fabrication des feuilles de verre usuels (flottage du verre sur bain de métal fondu) et avec les procédés de bombage pour s'assurer d'un bombage simultané lors de la fabrication d'un vitrage feuilleté comprenant une feuille de type silico-sodo-calcique.

La teneur pondérale en $Al_2O_3$ est comprise entre 3 et 8% ce qui permet de jouer sur la viscosité du verre de façon à rester dans des gammes de viscosité qui permettent de fabriquer les verres sans augmenter les températures de formage. L'alumine a également une influence sur les performances au niveau du renforcement chimique des verres.

Les oxydes de sodium et de potassium permettent de maintenir les températures de fusion et la viscosité des verres dans les limites acceptables. La présence simultanée de ces deux oxydes a notamment pour avantage d'augmenter la résistance hydrolytique des verres et la vitesse d'interdiffusion entre les ions sodium et potassium.

La teneur pondérale en oxyde de magnésium varie entre 6 et 10% mais doit être ajustée en fonction de la teneur pondérale en $Al_2O_3$ et en $SiO_2$. Cet oxyde favorise la fusion des compositions de verre et améliore la viscosité aux hautes températures, tout en contribuant à l'augmentation de la résistance hydrolytique des verres.

La teneur pondérale en oxyde en calcium est limitée à 1,00% car cet oxyde est nuisible pour la trempe chimique.

Avantageusement, la feuille de verre est renforcée par un échange d'ions sodium par des ions potassium. Elle est renforcée par échange d'ions superficiels sur une profondeur d'échange d'ion d'au moins 30 $\mu$m, préférentiellement sur une profondeur d'au moins 35 $\mu$m. La profondeur d'échange est estimée par la méthode de la prise de poids. Elle est déduite à partir de la prise de masse des échantillons en supposant que le profil de diffusion est approximé par une fonction '*erfc*' avec pour convention que la profondeur d'échange correspond à la profondeur pour laquelle la concentration en ion potassium est égale à celle de la matrice verrière à 0,5% près (comme décrit dans René Gy, Ion exchange for glass strengthening, Materials Science and Engineering: B, Volume 149, Issue 2, 25 March 2008, Pages 159-165). Ici l'épaisseur de l'éprouvette est négligeable devant les dimensions de l'échantillon testé et la prise de poids $\Delta m$ peut être reliée à la profondeur d'échange $e_{ech}$ par la formule

$$e_{ech} = \sqrt{\pi}\, \frac{\Delta m}{m_i} \frac{M_{tot}\, e_v}{\alpha_{Na2O} \cdot (M_{K2O} - M_{Na2O})}$$

avec $m_i$ la masse initiale de l'éprouvette, $M_{tot}$ la masse molaire totale du verre, $M_{K2O}$ et $M_{Na2O}$ les masses molaires des oxydes $K_2O$ et $Na_2O$ respectivement, $\alpha_{Na2O}$ le pourcentage molaire de sodium, $e_v$ l'épaisseur de l'éprouvette.

Un autre objet de l'invention porte sur un vitrage feuilleté comprenant au moins une feuille de verre telle que décrit ci-avant.

Le vitrage feuilleté selon l'invention comprend au moins une première feuille de verre de type silico-sodo-calcique, un intercalaire polymérique et une seconde feuille de verre qui a la composition décrite ci-avant et qui est colorée.

Il est essentiel que les deux feuilles de verre constitutives du vitrage selon la présente invention puissent être bombées de façon simultanée. Le vitrage feuilleté selon l'invention est caractérisé par le fait que l'écart entre les températures de chacune des feuilles de verre constitutives du vitrage pour lesquelles la viscosité vaut $10^{10,3}$ Poises, notée T(log $\eta$=10,3) est inférieure, en valeur absolue, à 30°C. Cette température est obtenue en effectuant la moyenne entre la température supérieure de recuisson, c'est-à-dire la température à laquelle la viscosité du verre vaut $10^{13}$ Poises et la température de ramollissement, c'est-à-dire la température à laquelle la viscosité du verre vaut $10^{7,6}$ Poises pour chacune des feuilles de verre. La température supérieure de recuisson correspond à la température pour laquelle la viscosité du verre est assez forte pour que la disparition des contraintes puisse s'effectuer totalement en un temps déterminé (temps de relaxation des contraintes d'environ 15 minutes). Cette température est également parfois appelée « température de relaxation des contraintes ». Les mesures de cette température sont effectuées classiquement selon la norme NF B30-105. La température de ramollissement, également parfois appelée «température de Littleton» est quant à elle définie comme étant la température à laquelle un fil de verre d'un diamètre d'environ 0,7 mm et de longueur 23,5 cm s'allonge de 1mm/min, sous son propre poids (norme ISO 7884-6). Cette température peut être mesurée ou calculée comme expliqué dans la publication Fluegel A. 2007, Europ. J. Glass Sci. Technol. A 48 (1) 13-30. Préférentiellement, l'écart entre la température $T_1$ (log $\eta$=10,3) de la première feuille de verre et la température $T_2$ (log $\eta$=10,3) de la deuxième feuille de verre est inférieure en valeur absolue à 23°C. Ce faible écart de température permet de s'assurer que les deux feuilles de verre du vitrage selon l'invention peuvent être bombées simultanément, puis assemblées avec l'intercalaire polymérique, sans risquer de faire apparaitre des défauts tels que des défauts optiques dans le vitrage.

Ainsi, en associant une première feuille de verre de type silico-sodo calcique avec une deuxième feuille de verre de type aluminosilicate de composition chimique décrite ci-avant, les inventeurs ont découvert qu'il était possible d'obtenir par bombage simultané des deux feuilles de verre un vitrage présentant les propriétés de résistance mécanique et de coloration recherchées.

La seconde feuille de verre est un verre de type aluminosilicate coloré, comprenant les oxydes suivants dans les gammes de teneurs pondérales définies ci-après :

| | |
|---|---|
| $SiO_2$ | entre 59,20 et 68, 00% |
| $Al_2O_3$ | entre 2,00 et 8,00% |
| MgO | entre 6,00 et 9,00% si la teneur en $Al_2O_3$ est comprise |
| | entre 5,00 et 8,00% et si le rapport $SiO_2/Al_2O_3$ est supérieur ou égal à 7,8 ou |
| | entre 8,00 et 10,00 %si la teneur en $Al_2O_3$ est comprise |
| | entre 2,00 et 5,00% et si le rapport $SiO_2/Al2O_3$ est supérieur ou égal à 24, |
| $Na_2O$ | entre 9,00 et 16,00% |
| $K_2O$ | entre 5,00 et 11,00% |
| $B_2O_3$ | entre 0 et 3,00% |
| CaO | entre 0 et 1,00% |

et les agents colorants suivants dans les gammes de teneurs pondérales définies ci-après :

| | |
|---|---|
| $Fe_2O_3$ total | entre 0,05 et 6,00% |
| CoO | entre 0 et 2,00% |
| NiO | entre 0 et 1,00% |
| Se | entre 0 et 0,10% |

le verre présentant un facteur redox compris entre 0,10 et 0,65.

Elle possède une température $T_2$ (log $\eta$=10,3) proche de la température $T_1$ (log $\eta$=10,3) de la première feuille de verre, ce qui permet de bomber les deux feuilles simultanément de façon plus aisée.

Selon un mode de réalisation, la teneur en $Al_2O_3$ est comprise entre 3,00 et 8,00% et dans ce cas, la teneur en MgO est comprise entre 8,00 et 10,00 %si la teneur en $Al_2O_3$ est comprise entre 3,00 et 5,00%et si le rapport $SiO_2/Al2O_3$ est supérieur ou égal à 24.

La première feuille de verre est de type silico-sodo-calcique et comprend les oxydes suivants dans les gammes de teneurs pondérales définies ci-après :

| | |
|---|---|
| $SiO_2$ | entre 65,00 et 75,00% |
| $Na_2O$ | entre 10,00 et 20,00% |
| CaO | entre 2,00 et 15,00% |
| $Al_2O_3$ | entre 0 et 5,00% |
| MgO | entre 0 et 5,00% |
| $K_2O$ | entre 0 et 5,00% |

Les compositions des premières et deuxièmes feuilles de verre mentionnées ci-dessus n'indiquent que les constituants essentiels. Elles ne donnent pas les éléments mineurs de la composition, comme les agents affinants classiquement utilisés tels que les oxydes d'arsenic, d'antimoine, d'étain, de cérium, les halogènes ou les sulfures métalliques.

Les feuilles de verre constitutives du vitrage feuilleté selon la présente invention sont d'épaisseurs différentes et la première feuille de verre est la feuille la plus épaisse. La première feuille de verre a une épaisseur d'au plus 2,1 mm, de préférence d'au plus 1,6 mm. La deuxième feuille de verre qui est plus mince que la première a une épaisseur d'au plus 1,5 mm. Préférentiellement, cette feuille a une épaisseur d'au plus 1,1 mm voire est inférieure à 1mm. Avantageusement, la deuxième feuille de verre a une épaisseur inférieure ou égale à 0,7 mm. L'épaisseur de la feuille est d'au moins 50 $\mu$m. Le fait d'utiliser des feuilles de verre mince permet d'alléger le vitrage feuilleté et par conséquent répond aux spécifications demandées actuellement par les constructeurs qui cherchent à diminuer le poids des véhicules.

L'intercalaire polymérique placé entre les deux feuilles de verre est constitué d'une ou plusieurs couches de matériau thermoplastique. Il peut notamment être en polyuréthane, en polycarbonate, en polyvynilbutyral (PVB), en polyméthacrylate de méthyle (PMMA), en éthylène vinyl acétate (EVA) ou en résine ionomère. L'intercalaire polymérique peut se présenter sous la forme d'un film multicouche, possédant des fonctionnalités particulières comme par exemple de meilleures propriétés acoustiques, anti UV, anti IR, ... De façon classique, l'intercalaire polymérique comprend au moins une couche de PVB. L'épaisseur de l'intercalaire polymérique est compris entre 50 $\mu$m et 4 mm. Généralement, son épaisseur est inférieure à 1mm. Dans les vitrages automobiles, l'épaisseur de l'intercalaire polymérique est classiquement de 0,76 mm. Lorsque les feuilles de verre constitutives du vitrage sont très minces, il peut être avantageux d'utiliser une feuille polymérique d'une épaisseur supérieure à 1mm voire supérieure à 2 ou 3 mm pour conférer de la rigidité au vitrage feuilleté, sans apporter un alourdissement trop important.

L'invention a également pour objet un procédé d'obtention du vitrage feuilleté selon la présente invention, comprenant une étape de bombage simultané de la première et la deuxième feuille de verre, une étape d'échange ionique de la deuxième feuille de verre et une étape d'assemblage des deux feuilles de verre avec l'intercalaire polymérique.

Les feuilles de verre constitutives du vitrage selon la présente invention peuvent être fabriquées selon différents procédés connus, tels que le procédé de flottage (ou encore « float ») dans lequel le verre fondu est déversé sur un bain d'étain en fusion, et le procédé de laminage entre deux rouleaux (ou encore «fusion draw »), dans lequel le verre fondu déborde d'un canal et vient former une feuille par gravité, ou encore le procédé dit « down-draw », dans lequel le verre fondu s'écoule vers le bas par une fente, avant d'être étiré à l'épaisseur voulue et simultanément refroidi.

L'étape de bombage des première et deuxième feuilles de verre est réalisée de façon simultanée. Les deux feuilles de verre sont positionnées l'une au-dessus de l'autre dans un cadre ou squelette de bombage, la feuille de verre la plus mince étant celle du dessus, la plus éloignée du squelette. L'ensemble est ainsi introduit dans un four de bombage. Les deux feuilles sont séparées par un agent pulvérulent de type talc, calcite, ou poudre céramique pour éviter les frottements et le collage d'une feuille sur l'autre. Le bombage ainsi réalisé est un formage par gravité et/ou par pressage.

L'échange ionique que subit la deuxième feuille de verre est généralement réalisé en plaçant ladite feuille dans un bain rempli d'un sel fondu de l'ion alcalin désiré, par exemple dans un bain de nitrate de potassium. Cet échange a lieu à une température inférieure à la température de transition du verre et à la température de dégradation du bain, avantageusement à une température inférieure à 490°C. La durée de l'échange ionique est inférieure à 24 heures. Cependant, il est souhaitable qu'il soit plus court pour être compatible avec les productivités des procédés de fabrication des vitrages feuilletés pour l'automobile. La durée de traitement est avantageusement inférieure ou égale à 4 heures, préférentiellement inférieure ou égale à 2 heures. Les températures et les durées d'échange sont à ajuster en fonction de la composition du verre, de l'épaisseur de la feuille de verre et du niveau de contraintes souhaité. L'échange ionique peut être avantageusement suivi d'une étape de traitement thermique pour diminuer la contrainte de tension à coeur et augmenter la profondeur en compression.

L'étape d'assemblage consiste ensuite à assembler les deux feuilles de verre avec l'intercalaire thermoplastique par mise sous pression dans un autoclave et élévation de la température.

Le vitrage feuilleté selon la présente invention constitue avantageusement un vitrage pour l'automobile. La première feuille de type silico-sodo-calcique et la seconde feuille plus mince de type aluminosilicate sont bombées ensemble avant d'être assemblées avec l'intercalaire polymérique pour former le vitrage selon la présente invention. La deuxième feuille est celle qui est au-dessus dans le cadre de bombage. Une fois montée dans le véhicule, cette deuxième feuille de verre correspond avantageusement à la feuille de verre interne, c'est-à-dire celle placée vers l'intérieur de l'habitacle. La première feuille de verre est donc celle qui est placée vers l'extérieur. Les feuilles de verre peuvent ainsi être assemblées directement après l'étape de bombage, sans nécessiter l'inversion de l'ordre des feuilles de verre.

Il est également possible si la feuille de verre mince colorée doit être située à l'extérieur de l'habitacle, d'inverser les deux feuilles de verre après l'étape de bombage.

Les exemples ci-après illustrent l'invention sans en limiter la portée.

Des vitrages selon l'invention ont été préparés à partir de différentes feuilles de verre de composition différente. Différentes compositions pour la deuxième feuille de verre ont été préparées et sont données dans les tableaux ci-après :

|  | Ex.1 | Ex.2 | Ex.3 | Ex.4 | Ex.5 | Ex.6 | Ex.7 | Ex.8 | Ex.9 |
|---|---|---|---|---|---|---|---|---|---|
| $SiO_2$ | 62.37 | 61.35 | 62.34 | 61.57 | 61.69 | 59.41 | 63.34 | 64.25 | 60.23 |
| $Al_2O_3$ | 7.89 | 7.80 | 7.93 | 7.86 | 7.84 | 7.57 | 2.58 | 2.56 | 7.59 |
| MgO | 8.43 | 8.35 | 8.41 | 8.38 | 8.85 | 6.44 | 9.26 | 8.06 | 8.17 |
| $Na_2O$ | 11.75 | 11.75 | 11.85 | 11.55 | 11.75 | 11.10 | 9.34 | 9.38 | 11.53 |
| $K_2O$ | 9.51 | 9.68 | 9.21 | 9.27 | 9.71 | 9.12 | 8.40 | 8.64 | 9.35 |
| $Fe_2O_3$total | 0.05 | 1.07 | 0.05 | 0.06 | 0.05 | 5.04 | 5.62 | 5.66 | 1.62 |
| CoO | - | - | 0.21 | 1.31 | 0,11 | 0,55 | 0,60 | 0.60 | 1.51 |
| NiO | - | - | - | - | - | 0.77 | 0.86 | 0.85 | - |
| redox | 0.5 | 0.17 | 0.46 | n.d. | 0.306 | 0.14 | 0.13 | 0.13 | 0.10 |
| total | 100,00 | 100,00 | 100,00 | 100,00 | 100,00 | 100,00 | 100,00 | 100,00 | 100,00 |

Tableau 1

n.d. : non déterminé

|  | Ex10 | Ex11 | Ex12 | Ex13 | Ex14 |
|---|---|---|---|---|---|
| $SiO_2$ | 58.79 | 59.90 | 56.41 | 58.20 | 60.11 |
| $Al_2O_3$ | 7.51 | 8.57 | 11.54 | 7.96 | 7.10 |
| MgO | 7.97 | 8.12 | 7.20 | 7.70 | 8.77 |
| $Na_2O$ | 11.14 | 11.12 | 10.13 | 10.74 | 8.71 |
| $K_2O$ | 9.20 | 9.55 | 8.27 | 8.72 | 7.93 |
| $Fe_2O_3$total | 5.39 | 2.74 | 4.97 | 5.03 | 5.94 |
| CoO | - | - | 0.71 | 0.90 | 0.60 |
| NiO | - | - | 0.77 | 0.75 | 0.84 |
| redox | 0.16 | 0.12 | 0.18 | 0.18 | 0.15 |
| total | 100,00 | 100,00 | 100,00 | 100,00 | 100,00 |

Tableau 1-suite

Les caractéristiques optiques et la transmission lumineuse des échantillons sont mesurées pour une épaisseur de feuille de verre de 0.7 mm. Le facteur de transmission lumineuse globale est mesuré sous illuminant A TLa entre 380 et 780 nm. Le facteur de transmission énergétique globale TE intégrée entre 295 et 2500 nm selon la norme ISO 9050 (Parry Moon masse d'air 1.5) est également indiqué pour certains exemples.

Le tableau suivant 2 présente les résultats obtenus :

|  | Ex. 1 | Ex.2 | Ex.3 | Ex.4 | Ex.5 | Ex.6 | Ex.7 |
|---|---|---|---|---|---|---|---|
| TLa (0.7 mm) | 90 | 88 | 25 | 0.8 | 45 | 0.8 | 0.8 |
| TE (0.7 mm) | n.d. | n.d. | n.d. | n.d. | n.d. | 14.6 | 12.7 |
| L* | 14 | 95 | 60 | 15 | 75 | 8.5 | 7.6 |
| a* | -8 | -1.9 | 12 | 101 | 1.5 | 3.9 | -3.6 |
| b* | 1.5 | 1.2 | -50 | -98 | -30 | -17.5 | -6.5 |

Tableau 2

n.d. : non déterminé

|  | Ex.8 | Ex.9 | Ex10 | Ex11 | Ex12 | Ex13 | Ex14 |
|---|---|---|---|---|---|---|---|
| TLa (0.7 mm) | 0.9 | 0.13 | 50 | 80 | 1.66 | 0.9 | 1.1 |
| TE (0.7 mm) | 14.4 | 30.8 | n.d. | n.d. | 13.5 | 10.9 | 12.8 |
| L* | 9 | 0 | 75 | 92 | 14 | 9 | 10.6 |
| a* | 1.6 | 58.8 | -7.4 | -4.3 | -7.8 | -2.8 | -7.6 |
| b* | -14.6 | -55.1 | 30 | 7.6 | 1.2 | -8.4 | 0.8 |

Tableau 2-suite

n.d. : non déterminé

Les caractérisations optiques montrent que les feuilles de verre peuvent avoir des niveaux de transmission très différents et également des colorations très variées, en fonction des teneurs pondérales en agents colorants. Les exemples 1, 2, 10 et 11 sont des verres de couleur verte. Les exemples 3, 4 et 5 sont des verres de couleur bleue et les exemples 6 à 9, et 12 à 14 sont des verres de couleur noire.

Le tableau 3 donne les valeurs des températures supérieures de recuisson T(log $\eta$=13) obtenue par dilatométrie, les températures de Littleton, les températures pour lesquelles la viscosité du verre vaut 10,3 Poises T(log $\eta$=7,6), ainsi que la profondeur d'échange après un échange ionique d'une durée de 4 h à une température de 440°C pour chacune des compositions données dans le tableau ci-dessus (épaisseur des échantillons testés 0.72 mm).

|  | Ex.1 | Ex.2 | Ex.3 | Ex.4 | Ex.5 | Ex.6 | Ex.7 | Ex.8 |
|---|---|---|---|---|---|---|---|---|
| T(log $\eta$=13) en °C | 557 | 548 | 553 | 553 | 554 | 538 | 550 | 541 |
| T(log $\eta$=7,6) en °C | 724 | 732 | 740 | 737 | 740 | 715 | 724 | 716 |
| T(log $\eta$=10,3) En °C | 641 | 640 | 647 | 649 | 647 | 627 | 637 | 629 |
| Profondeur d'échange (µm) | 58 | 37 | 45 | 35.1 | 35.9 | 30.4 | 35.5 | 37.7 |

|  | Ex9 | Ex10 | Ex11 | Ex12 | Ex13 | Ex14 |
|---|---|---|---|---|---|---|
| T(log $\eta$=13) en °C | 552 | 545 | 573 | 578 | 551 | 578 |
| T(log $\eta$=7,6) en °C | 734 | 717 | 737 | 757 | 728 | 754 |
| T(log $\eta$=10,3) En °C | 643 | 631 | 655 | 667.5 | 639.5 | 666 |
| Profondeur d'échange (µm) | 34.1 | 23.2 | 29.1 | 20.9 | 25.8 | 25.1 |

Tableau 3

Les exemples 10 à 14 sont des exemples non conformes à l'invention : les profondeurs d'échange sont inférieures à 30 µm pour tous ces échantillons.

Des vitrages selon la présente invention sont fabriqués en utilisant une première feuille de verre de composition suivante:

| | |
|---|---|
| $SiO_2$ | 71,50% |
| $Na_2O$ | 14,10% |
| CaO | 8,75% |
| $Al_2O_3$ | 0,80% |

(suite)

| | |
|---|---|
| MgO | 4,00% |
| K$_2$O | 0,25% |
| Divers | 0.6% |

Les températures caractéristiques de cette composition sont respectivement 545°C et 725°C pour T(log $\eta$=13) et T(log $\eta$=7,6). La température T(log $\eta$=10,3) vaut donc 635°C.

Les vitrages feuilletés asymétriques sont fabriqués en utilisant une première feuille de verre de la composition silico-sodo-calcique donnée ci-dessus d'une épaisseur de 1,6 mm, un intercalaire en PVB d'une épaisseur de 0,76 mm et une deuxième feuille de verre d'une épaisseur de 0.7 mm dont la composition est donnée dans le tableau 1.

Toutes les compositions des exemples ci-dessus, à l'exception des exemples 12 et 14 ont un écart de température entre la température T1(log $\eta$=10,3) de la première feuille de verre de type silico-sodo-calcique et la température T2(log $\eta$=10,3) de la seconde feuille de verre de type aluminosilicate des feuilles de verres inférieur, en valeur absolue, à 30°C, ce qui rend les deux feuilles de verre bombables simultanément.

Seuls les verres préparés avec une seconde feuille de verre conforme à l'invention (ex 1 à 9) permettent d'obtenir des vitrages feuilletés qui répondent à la fois aux critères de résistance mécanique, de coloration et de possibilité de bombage simultané.

## Revendications

1. Feuille de verre coloré de composition aluminosilicate renforcé chimiquement par un échange ionique **caractérisée** en qu'elle comprend les oxydes suivants dans les gammes de teneurs pondérales définies ci-après :

   | | |
   |---|---|
   | SiO$_2$ | entre 59,20 et 68, 00% |
   | Al$_2$O$_3$ | entre 2,00 et 8,00% |
   | MgO | entre 6,00 et 9,00% si la teneur en Al$_2$O$_3$ est comprise |
   | | entre 5,00 et 8,00% et si le rapport SiO$_2$/Al$_2$O$_3$ est supérieur ou égal à 7,8 ou |
   | | entre 8,00 et 10,00 %si la teneur en Al$_2$O$_3$ est comprise |
   | | entre 2,00 et 5,00% et si le rapport SiO$_2$/Al2O$_3$ est supérieur ou égal à 24, |
   | Na$_2$O | entre 9,00 et 16,00% |
   | K$_2$O | entre 5,00 et 11,00% |
   | B$_2$O$_3$ | entre 0 et 3,00% |
   | CaO | entre 0 et 1,00% |

   et les agents colorants suivants dans les gammes de teneurs pondérales définies ci-après :

   | | |
   |---|---|
   | Fe$_2$O$_3$ total | entre 0,05 et 6,00% |
   | CoO | entre 0 et 2,00% |
   | NiO | entre 0 et 1,00% |
   | Se | entre 0 et 0,10% |

   le verre présentant un facteur redox compris entre 0.10 et 0.65

2. Feuille de verre coloré selon la revendication précédente, de composition aluminosilicate renforcé chimiquement par un échange ionique **caractérisée** en qu'elle comprend les oxydes suivants dans les gammes de teneurs pondérales définies ci-après :

   | | |
   |---|---|
   | SiO$_2$ | entre 59,20 et 68, 00% |
   | Al$_2$O$_3$ | entre 3,00 et 8,00% |
   | MgO | entre 6,00 et 9,00% si la teneur en Al$_2$O$_3$ est comprise |
   | | entre 5,00 et 8,00% et si le rapport SiO$_2$/Al$_2$O$_3$ est supérieur ou égal à 7,8 ou |
   | | entre 8,00 et 10,00 %si la teneur en Al$_2$O$_3$ est comprise |
   | | entre 3,00 et 5,00% et si le rapport SiO$_2$/Al2O$_3$ est supérieur ou égal à 24, |

(suite)

| | |
|---|---|
| Na$_2$O | entre 9,00 et 16,00% |
| K$_2$O | entre 5,00 et 11,00% |
| B$_2$O$_3$ | entre 0 et 3,00% |
| CaO | entre 0 et 1,00% |

et les agents colorants suivants dans les gammes de teneurs pondérales définies ci-après :

| | |
|---|---|
| Fe$_2$O$_3$ total | entre 0,05 et 6,00% |
| CoO | entre 0 et 2,00% |
| NiO | entre 0 et 1,00% |
| Se | entre 0 et 0,10% |

le verre présentant un facteur redox compris entre 0.10 et 0.65

3. Feuille selon l'une des revendications précédentes **caractérisée en ce qu'**elle comprend d'autres agents colorants choisis parmi les oxydes de vanadium, de chrome, de manganèse, de cuivre, d'étain, de lanthanides, d'argent, de titane, et/ou des sulfures dans une teneur pondérale inférieure à 1,00%

4. Feuille de verre selon l'une des revendications précédentes **caractérisée en ce qu'**elle renforcée par trempe chimique avec une profondeur d'échange d'ion d'au moins 30 $\mu$m, de préférence d'au moins 35 $\mu$m.

5. Vitrage feuilleté **caractérisée en ce qu'**il comprend au moins une première feuille de verre de type silico-sodo-calcique, un intercalaire polymérique et une seconde feuille de verre comprenant les oxydes suivants dans les gammes de teneurs pondérales définies ci-après :

| | |
|---|---|
| SiO$_2$ | entre 59,20 et 68, 00% |
| Al$_2$O$_3$ | entre 2,00 et 8,00% |
| MgO | entre 6,00 et 9,00% si la teneur en Al$_2$O$_3$ est comprise |
| | entre 5,00 et 8,00% et si le rapport SiO$_2$/Al$_2$O$_3$ est supérieur ou égal à 7,8 ou |
| | entre 8,00 et 10,00 % si la teneur en Al$_2$O$_3$ est comprise |
| | entre 2,00 et 5,00% et si le rapport SiO$_2$/Al2O$_3$ est supérieur ou égal à 24, |
| Na$_2$O | entre 9,00 et 16,00% |
| K$_2$O | entre 5,00 et 11,00% |
| B$_2$O$_3$ | entre 0 et 3,00% |
| CaO | entre 0 et 1,00% |

et les agents colorants suivants dans les gammes de teneurs pondérales définies ci-après :

| | |
|---|---|
| Fe$_2$O$_3$ total | entre 0,05 et 6,00% |
| CoO | entre 0 et 2,00% |
| NiO | entre 0 et 1,00% |
| Se | entre 0 et 0,10% |

le verre présentant un facteur redox compris entre 0.10 et 0.65.

6. Vitrage feuilleté **caractérisée** selon la revendication précédente **caractérisé en ce qu'**il comprend au moins une première feuille de verre de type silico-sodo-calcique, un intercalaire polymérique et une seconde feuille de verre comprenant les oxydes suivants dans les gammes de teneurs pondérales définies ci-après :

| | |
|---|---|
| SiO$_2$ | entre 59,20 et 68, 00% |
| Al$_2$O$_3$ | entre 3,00 et 8,00% |
| MgO | entre 6,00 et 9,00% si la teneur en Al$_2$O$_3$ est comprise |

(suite)

entre 5,00 et 8,00% et si le rapport $SiO_2/Al_2O_3$ est supérieur ou égal à 7,8 ou

entre 8,00 et 10,00 %si la teneur en $Al_2O_3$ est comprise

entre 3,00 et 5,00% et si le rapport $SiO_2/Al2O_3$ est supérieur ou égal à 24,

| | |
|---|---|
| $Na_2O$ | entre 9,00 et 16,00% |
| $K_2O$ | entre 5,00 et 11,00% |
| $B_2O_3$ | entre 0 et 3,00% |
| CaO | entre 0 et 1,00% |

et les agents colorants suivants dans les gammes de teneurs pondérales définies ci-après :

| | |
|---|---|
| $Fe_2O_3$ total | entre 0,05 et 6,00% |
| CoO | entre 0 et 2,00% |
| NiO | entre 0 et 1,00% |
| Se | entre 0 et 0,10% |

le verre présentant un facteur redox compris entre 0.10 et 0.65

7. Vitrage selon l'une des revendications 5 ou 6 **caractérisé en ce que** la première feuille de verre est un verre de type silico-sodo-calcique comprenant les oxydes suivants dans les gammes de teneurs pondérales définies ci-après :

| | |
|---|---|
| $SiO_2$ | entre 65,00 et 75,00% |
| $Na_2O$ | entre 10,00 et 20,00% |
| CaO | entre 2,00 et 15,00% |
| $Al_2O_3$ | entre 0 et 5,00% |
| MgO | entre 0 et 5,00% |
| $K_2O$ | entre 0 et 5,00% |

8. Vitrage selon l'une des revendications 5 à 7 **caractérisé en ce que** l'écart entre les températures T(log $\eta$=10,3) de chacune des feuilles de verres pour lesquelles la viscosité vaut $10^{10,3}$ Poises est inférieure, en valeur absolue, à 30°Cet de préférence inférieure, en valeur absolue, à 23°C.

9. Vitrage selon l'une des revendications 5 à 8 **caractérisé en ce que** la première feuille de verre a une épaisseur d'au plus 2,1 mm, de préférence d'au plus 1,6 mm.

10. Vitrage selon l'une des revendications 5 à 9 **caractérisé en ce que** la deuxième feuille de verre qui est plus mince que la première a une épaisseur d'au plus 1,5 mm, de préférence d'au plus 1,1 mm voire inférieure à 1mm.

11. Vitrage selon l'une des revendications 5 à 10 **caractérisé en ce que** l'intercalaire polymérique placé entre les deux feuilles de verre est constitué d'une ou plusieurs couches de matériau thermoplastique, notamment en polyuréthane, en polycarbonate, en polyvynilbutyral (PVB), en polyméthacrylate de méthyle (PMMA), en éthylène vinyl acétate (EVA) ou en résine ionomère.

12. Vitrage selon la revendication 11 **caractérisé en ce que** l'épaisseur de l'intercalaire polymérique est comprise entre 50 $\mu$m et 4 mm.

13. Procédé de fabrication du vitrage feuilleté selon l'une des revendications 5 à 12 **caractérisé en ce qu'**il comprend au moins une étape de bombage simultané de la première et de la deuxième feuille de verre, une étape d'échange ionique de la deuxième feuille de verre et une étape d'assemblage des deux feuilles de verre avec l'intercalaire polymérique.

14. Procédé selon la revendication 13 **caractérisé en ce que** l'étape d'échange ionique a lieu à une température inférieure à 490°C, pendant une durée inférieure à 24 heures, de préférence inférieure ou égale à 4h, voire inférieure ou égale à 2h.

**15.** Procédé selon l'une des revendications 13 ou 14 **caractérisé en ce que** pendant l'étape de bombage la seconde feuille de verre plus mince que la première feuille est positionnée au-dessus de la première feuille de verre.

**16.** Vitrage pour automobile obtenu par le procédé selon l'une des revendications 13 à 15 **caractérisé en ce que** la deuxième feuille de verre est placée vers l'intérieur de l'habitacle.

**Patentansprüche**

**1.** Farbige Glasscheibe mit durch einen Ionenaustausch chemisch verstärkter Aluminosilikatzusammensetzung, **dadurch gekennzeichnet, dass** sie die folgenden Oxide in den nachfolgend festgelegten Gewichtanteilsbereichen umfasst:

$SiO_2$      zwischen 59,20 und 68,00 %
$Al_2O_3$     zwischen 2,00 und 8,00 %
MgO      zwischen 6,00 und 9,00 %, wenn der Anteil an $Al_2O_3$ zwischen 5,00 und 8,00% liegt, und wenn das Verhältnis $SiO_2/Al_2O_3$ größer als oder gleich 7,8 ist oder
         zwischen 8,00 und 10,00 %, wenn der Anteil an $Al_2O_3$ zwischen 2,00 und 5,00 % liegt, und wenn das Verhältnis $SiO_2/Al_2O_3$ größer als oder gleich 24 ist,
$Na_2O$     zwischen 9,00 und 16,00 %
$K_2O$      zwischen 5,00 und 11,00 %
$B_2O_3$     zwischen 0 und 3,00 %
CaO      zwischen 0 und 1,00 %

und die folgenden Farbmittel in den nachfolgend festgelegten Gewichtsanteilsbereichen:

| | |
|---|---|
| $Fe_2O_3$ gesamt | zwischen 0,05 und 6,00 % |
| CoO | zwischen 0 und 2,00 % |
| NiO | zwischen 0 und 1,00 % |
| Se | zwischen 0 und 0,10 % |

wobei das Glas einen Redoxfaktor aufweist, der zwischen 0,10 und 0,65 liegt.

**2.** Farbige Glasscheibe nach dem vorangehenden Anspruch mit durch einen Ionenaustausch chemisch verstärkter Aluminosilikatzusammensetzung, **dadurch gekennzeichnet, dass** sie die folgenden Oxide in den nachfolgend festgelegten Gewichtanteilsbereichen umfasst:

$SiO_2$      zwischen 59,20 und 68,00 %
$Al_2O_3$     zwischen 3,00 und 8,00 %
MgO      zwischen 6,00 und 9,00 %, wenn der Anteil an $Al_2O_3$ zwischen 5,00 und 8,00 % liegt, und wenn das Verhältnis $SiO_2/Al_2O_3$ größer als oder gleich 7,8 ist oder
         zwischen 8,00 und 10,00 %, wenn der Anteil an $Al_2O_3$ zwischen 3,00 und 5,00 % liegt, und wenn das Verhältnis $SiO_2/Al_2O_3$ größer als oder gleich 24 ist,
$Na_2O$     zwischen 9,00 und 16,00 %
$K_2O$      zwischen 5,00 und 11,00 %
$B_2O_3$     zwischen 0 und 3,00 %
CaO      zwischen 0 und 1,00 %

und die folgenden Farbmittel in den nachfolgend festgelegten Gewichtsanteilsbereichen:

| | |
|---|---|
| $Fe_2O_3$ gesamt | zwischen 0,05 und 6,00 % |
| CoO | zwischen 0 und 2,00 % |

(fortgesetzt)

| | |
|---|---|
| NiO | zwischen 0 und 1,00 % |
| Se | zwischen 0 und 0,10 % |

wobei das Glas einen Redoxfaktor aufweist, der zwischen 0,10 und 0,65 liegt.

3. Scheibe nach einem der vorangehenden Ansprüche, **dadurch gekennzeichnet, dass** sie andere Farbmittel umfasst, die aus dem Vanadium-, Chrom-, Mangan-, Kupfer-, Zinn-, Lanthanid-, Silber, Titanoxiden und/oder Sulfiden in einem Gewichtsanteil unter 1,00 % ausgewählt sind.

4. Glasscheibe nach einem der vorangehenden Ansprüche, **dadurch gekennzeichnet, dass** sie durch chemische Vorspannung mit einer Ionenaustauschtiefe von mindestens 30 $\mu$m, vorzugsweise mindestens 35 $\mu$m, verstärkt ist.

5. Verbundverglasung, **dadurch gekennzeichnet, dass** sie mindestens eine erste Glasscheibe vom Typ Kalknatron-Silikat, eine Polymer-Zwischenlage und eine zweite Glasscheibe umfasst, umfassend die folgenden Oxide in den nachfolgend festgelegten Gewichtsanteilsbereichen:

| | |
|---|---|
| $SiO_2$ | zwischen 59,20 und 68,00 % |
| $Al_2O_3$ | zwischen 2,00 und 8,00 % |
| MgO | zwischen 6,00 und 9,00 %, wenn der Anteil an $Al_2O_3$ zwischen 5,00 und 8,00 % liegt, und wenn das Verhältnis $SiO_2/Al_2O_3$ größer als oder gleich 7,8 ist oder |
| | zwischen 8,00 und 10,00 %, wenn der Anteil an $Al_2O_3$ zwischen 2,00 und 5,00 % liegt, und wenn das Verhältnis $SiO_2/Al_2O_3$ größer als oder gleich 24 ist, |
| $Na_2O$ | zwischen 9,00 und 16,00 % |
| $K_2O$ | zwischen 5,00 und 11,00 % |
| $B_2O_3$ | zwischen 0 und 3,00 % |
| CaO | zwischen 0 und 1,00 % |

und die folgenden Farbmittel in den nachfolgend festgelegten Gewichtsanteilsbereichen: $Fe_2O_3$ gesamt zwischen 0,05 und 6,00 %

| | |
|---|---|
| CoO | zwischen 0 und 2,00 % |
| NiO | zwischen 0 und 1,00 % |
| Se | zwischen 0 und 0,10 % |

wobei das Glas einen Redoxfaktor aufweist, der zwischen 0,10 und 0,65 liegt.

6. Verbundverglasung nach dem vorangehenden Anspruch, **dadurch gekennzeichnet, dass** sie mindestens eine erste Glasscheibe vom Typ Kalknatron-Silikat, eine Polymer-Zwischenlage und eine zweite Glasscheibe umfasst, umfassend die folgenden Oxide in den nachfolgend festgelegten Gewichtsanteilsbereichen:

| | |
|---|---|
| $SiO_2$ | zwischen 59,20 und 68,00 % |
| $Al_2O_3$ | zwischen 3,00 und 8,00 % |
| MgO | zwischen 6,00 und 9,00 %, wenn der Anteil an $Al_2O_3$ zwischen 5,00 und 8,00 % liegt, und wenn das Verhältnis $SiO_2/Al_2O_3$ größer als oder gleich 7,8 ist oder zwischen 8,00 und 10,00 %, wenn der Anteil an $Al_2O_3$ zwischen 3,00 und 5,00 % liegt, und wenn das Verhältnis $SiO_2/Al_2O_3$ größer als oder gleich 24 ist, |
| $Na_2O$ | zwischen 9,00 und 16,00 % |
| $K_2O$ | zwischen 5,00 und 11,00 % |
| $B_2O_3$ | zwischen 0 und 3,00 % |
| CaO | zwischen 0 und 1,00 % |

und die folgenden Farbmittel in den nachfolgend festgelegten Gewichtsanteilsbereichen:

| | |
|---|---|
| $Fe_2O_3$ gesamt | zwischen 0,05 und 6,00 % |

(fortgesetzt)

| | |
|---|---|
| CoO | zwischen 0 und 2,00 % |
| NiO | zwischen 0 und 1,00 % |
| Se | zwischen 0 und 0,10 % |

wobei das Glas einen Redoxfaktor aufweist, der zwischen 0,10 und 0,65 liegt.

7. Verglasung nach einem der Ansprüche 5 oder 6, **dadurch gekennzeichnet, dass** die erste Glasscheibe ein Glas vom Typ Kalknatron-Silikat ist, umfassend die folgenden Oxide in den nachfolgend festgelegten Gewichtsanteilsbereichen:

| | |
|---|---|
| $SiO_2$ | zwischen 65,00 und 75,00 % |
| $Na_2O$ | zwischen 10,00 und 20,00 % |
| CaO | zwischen 2,00 und 15,00 % |
| $Al_2O_3$ | zwischen 0 und 5,00 % |
| MgO | zwischen 0 und 5,00 % |
| $K_2O$ | zwischen 0 und 5,00 % |

8. Verglasung nach einem der Ansprüche 5 bis 7, **dadurch gekennzeichnet, dass** die Differenz zwischen den Temperaturen T(log $\eta$=10,3) jeder der Glasscheiben, für welche die Viskosität $10^{10,3}$ Poises beträgt, kleiner, in absolutem Wert, als 30 °C und vorzugsweise kleiner, in absolutem Wert, als 23 °C ist.

9. Verglasung nach einem der Ansprüche 5 bis 8, **dadurch gekennzeichnet, dass** die erste Glasscheibe eine Stärke von höchstens 2,1 mm, vorzugsweise von höchstens 1,6 mm hat.

10. Verglasung nach einem der Ansprüche 5 bis 9, **dadurch gekennzeichnet, dass** die zweite Glasscheibe, die dünner als die erste ist, eine Stärke von höchstens 1,5 mm, vorzugsweise von höchstens 1,1 mm, sogar geringer als 1 mm hat.

11. Verglasung nach einem der Ansprüche 5 bis 10, **dadurch gekennzeichnet, dass** die Polymer-Zwischenlage, die zwischen den zwei Glasscheiben platziert ist, von einer oder mehreren Schichten thermoplastischen Materials, insbesondere aus Polyurethan, aus Polycarbonat, aus Polyvinylbutyral (PVB), aus Polymethylmethacrylat (PMMA), aus Ethylenvinylacetat (EVA) oder aus Ionomerharz gebildet ist.

12. Verglasung nach Anspruch 11, **dadurch gekennzeichnet, dass** die Stärke der Polymer-Zwischenlage zwischen 50 $\mu$m und 4 mm liegt.

13. Verfahren zur Herstellung der Verbundverglasung nach einem der Ansprüche 5 bis 12, **dadurch gekennzeichnet, dass** es mindestens einen Schritt des gleichzeitigen Wölbens der ersten und der zweiten Glasscheibe, einen Ionenaustauschschritt der zweiten Glasscheibe und einen Schritt des Verbindens der zwei Glasscheiben mit der Polymer-Zwischenlage umfasst.

14. Verfahren nach Anspruch 13, **dadurch gekennzeichnet, dass** der Ionenaustauschschritt bei einer Temperatur unter 490 °C während einer Dauer unter 24 Stunden, vorzugsweise unter oder von gleich 4 Stunden, sogar unter oder von gleich 2 Stunden, stattfindet.

15. Verfahren nach einem der Ansprüche 13 oder 14, **dadurch gekennzeichnet, dass** während des Schritts des Wölbens die zweite Glasscheibe, die dünner als die erste Scheibe ist, auf der ersten Glasscheibe positioniert wird.

16. Verglasung für Kraftfahrzeug, erhalten durch das Verfahren nach einem der Ansprüche 13 bis 15, **dadurch gekennzeichnet, dass** die zweite Glasscheibe in Richtung des Inneren des Fahrgastraums platziert ist.

**Claims**

1.  A colored glass sheet of aluminosilicate composition chemically strengthened by an ion exchange, **characterized in that** it comprises the following oxides in the weight content ranges defined below:

    | | |
    |---|---|
    | $SiO_2$ | between 59.20 and 68.00% |
    | $Al_2O_3$ | between 2.00 and 8.00% |
    | MgO | between 6.00 and 9.00% if the $Al_2O_3$ content is between 5.00 and 8.00% and if the $SiO_2/Al_2O_3$ ratio is greater than or equal to 7.8 or |
    | | between 8.00 and 10.00% if the $Al_2O_3$ content is between 2.00 and 5.00% and if the $SiO_2/Al_2O_3$ ratio is greater than or equal to 24, |
    | $Na_2O$ | between 9.00 and 16.00% |
    | $K_2O$ | between 5.00 and 11.00% |
    | $B_2O_3$ | between 0 and 3.00% |
    | CaO | between 0 and 1.00% |

    and the following coloring agents in the weight content ranges defined below:

    | | |
    |---|---|
    | $Fe_2O_3$ total | between 0.05 and 6.00% |
    | CoO | between 0 and 2.00% |
    | NiO | between 0 and 1.00% |
    | Se | between 0 and 0.10%, |

    the glass having a redox factor of between 0.10 and 0.65.

2.  A colored glass sheet as claimed in the preceding claim, of aluminosilicate composition chemically strengthened by an ion exchange, **characterized in that** it comprises the following oxides in the weight content ranges defined below:

    | | |
    |---|---|
    | $SiO_2$ | between 59.20 and 68.00% |
    | $Al_2O_3$ | between 3.00 and 8.00% |
    | MgO | between 6.00 and 9.00% if the $Al_2O_3$ content is between 5.00 and 8.00% and if the $SiO_2/Al_2O_3$ ratio is greater than or equal to 7.8 or between 8.00 and 10.00% if the $Al_2O_3$ content is between 3.00 and 5.00% and if the $SiO_2/Al2O_3$ ratio is greater than or equal to 24, |
    | $Na_2O$ | between 9.00 and 16.00% |
    | $K_2O$ | between 5.00 and 11.00% |
    | $B_2O_3$ | between 0 and 3.00% |
    | CaO | between 0 and 1.00% |

    and the following coloring agents in the weight content ranges defined below:

    | | |
    |---|---|
    | $Fe_2O_3$ total | between 0.05 and 6.00% |
    | CoO | between 0 and 2.00% |
    | NiO | between 0 and 1.00% |
    | Se | between 0 and 0.10%, |

    the glass having a redox factor of between 0.10 and 0.65.

3.  The sheet as claimed in either of the preceding claims, **characterized in that** it comprises other coloring agents chosen from vanadium, chromium, manganese, copper, tin, lanthanide, silver and titanium oxides, and/or sulfides in a weight content of less than 1.00%.

4.  The glass sheet as claimed in one of the preceding claims, **characterized in that** it is strengthened by chemical tempering with an ion exchange depth of at least 30 $\mu$m, preferably of at least 35 $\mu$m.

5. A laminated glazing, **characterized in that** it comprises at least a first glass sheet of soda-lime-silica type, a polymeric spacer and a second glass sheet comprising the following oxides in the weight content ranges defined below:

$SiO_2$     between 59.20 and 68.00%

$Al_2O_3$     between 2.00 and 8.00%

MgO     between 6.00 and 9.00% if the $Al_2O_3$ content is between 5.00 and 8.00% and if the $SiO_2/Al_2O_3$ ratio is greater than or equal to 7.8 or

between 8.00 and 10.00% if the $Al_2O_3$ content is between 2.00 and 5.00% and if the $SiO_2/Al_2O_3$ ratio is greater than or equal to 24,

$Na_2O$     between 9.00 and 16.00%

$K_2O$     between 5.00 and 11.00%

$B_2O_3$     between 0 and 3.00%

CaO     between 0 and 1.00%

and the following coloring agents in the weight content ranges defined below:

$Fe_2O_3$ total     between 0.05 and 6.00%

CoO     between 0 and 2.00%

NiO     between 0 and 1.00%

Se     between 0 and 0.10%,

the glass having a redox factor of between 0.10 and 0.65.

6. The laminated glazing as claimed in the preceding claim, **characterized in that** it comprises at least a first glass sheet of soda-lime-silica type, a polymeric spacer and a second glass sheet comprising the following oxides in the weight content ranges defined below:

$SiO_2$     between 59.20 and 68.00%

$Al_2O_3$     between 3.00 and 8.00%

MgO     between 6.00 and 9.00% if the $Al_2O_3$ content is between 5.00 and 8.00% and if the $SiO_2/Al_2O_3$ ratio is greater than or equal to 7.8 or

between 8.00 and 10.00% if the $Al_2O_3$ content is between 3.00 and 5.00% and if the $SiO_2/Al_2O_3$ ratio is greater than or equal to 24,

$Na_2O$     between 9.00 and 16.00%

$K_2O$     between 5.00 and 11.00%

$B_2O_3$     between 0 and 3.00%

CaO     between 0 and 1.00%

and the following coloring agents in the weight content ranges defined below:

$Fe_2O_3$ total     between 0.05 and 6.00%

CoO     between 0 and 2.00%

NiO     between 0 and 1.00%

Se     between 0 and 0.10%,

the glass having a redox factor of between 0.10 and 0.65.

7. The glazing as claimed in either of claims 5 and 6, **characterized in that** the first glass sheet is a glass of soda-lime-silica type comprising the following oxides in the weight content ranges defined below:

| | |
|---|---|
| $SiO_2$ | between 65.00 and 75.00% |
| $Na_2O$ | between 10.00 and 20.00% |
| CaO | between 2.00 and 15.00% |
| $Al_2O_3$ | between 0 and 5.00% |
| MgO | between 0 and 5.00% |
| $K_2O$ | between 0 and 5.00%. |

8. The glazing as claimed in one of claims 5 to 7, **characterized in that** the difference between the temperatures T(log $\eta$=10.3) of each of the glass sheets for which the viscosity is $10^{10.3}$ poises is less, as an absolute value, than 30°C and preferably less, as an absolute value, than 23°C.

9. The glazing as claimed in one of claims 5 to 8, **characterized in that** the first glass sheet has a thickness of not more than 2.1 mm, preferably not more than 1.6 mm.

10. The glazing as claimed in one of claims 5 to 9, **characterized in that** the second glass sheet, which is thinner than the first, has a thickness of not more than 1.5 mm, preferably not more than 1.1 mm, or even less than 1 mm.

11. The glazing as claimed in one of claims 5 to 10, **characterized in that** the polymeric spacer placed between the two glass sheets is formed from one or more layers of thermoplastic material, in particular of polyurethane, polycarbonate, polyvinyl butyral (PVB), polymethyl methacrylate (PMMA), ethylene-vinyl acetate (EVA) or ionomer resin.

12. The glazing as claimed in claim 11, **characterized in that** the thickness of the polymeric spacer is between 50 $\mu$m and 4 mm.

13. A process for manufacturing the laminated glazing as claimed in one of claims 5 to 12, **characterized in that** it comprises at least a step of simultaneous bending of the first and the second glass sheet, a step of ion exchange of the second glass sheet and a step of assembling the two glass sheets with the polymeric spacer.

14. The process as claimed in claim 13, **characterized in that** the ion exchange step takes place at a temperature below 490°C, for a time of less than 24 hours, preferably less than or equal to 4 hours, or even less than or equal to 2 hours.

15. The process as claimed in either of claims 13 and 14, **characterized in that**, during the bending step, the second glass sheet, which is thinner than the first sheet, is positioned above the first glass sheet.

16. A motor vehicle glazing obtained via the process as claimed in one of claims 13 to 15, **characterized in that** the second glass sheet is placed toward the interior of the passenger compartment.

## RÉFÉRENCES CITÉES DANS LA DESCRIPTION

**Documents brevets cités dans la description**

- WO 2015059407 A

- WO 2014120641 A

**Littérature non-brevet citée dans la description**

- **RENÉ GY.** *Ion exchange for glass strengthening, Materials Science and Engineering: B,* 25 Mars 2008, vol. 149 (2), 159-165

- **FLUEGEL A.** *Europ. J. Glass Sci. Technol. A,* 2007, vol. 48 (1), 13-30